(19) Europäisches Patentamt

European Patent Office

Office européen des brevets

(11) **EP 1 409 190 B1**

(12) **EUROPÄISCHE PATENTSCHRIFT**

(45) Veröffentlichungstag und Bekanntmachung des Hinweises auf die Patenterteilung:
**10.11.2004 Patentblatt 2004/46**

(51) Int Cl.⁷: **B23K 11/31**, B23K 11/25

(21) Anmeldenummer: 02751136.9

(86) Internationale Anmeldenummer:
**PCT/EP2002/007775**

(22) Anmeldetag: **12.07.2002**

(87) Internationale Veröffentlichungsnummer:
**WO 2003/008145 (30.01.2003 Gazette 2003/05)**

(54) **WIDERSTANDSSCHWEISSEINRICHTUNG UND STEUERVERFAHREN**

RESISTANCE WELDING DEVICE AND CONTROL METHOD

DISPOSITIF DE SOUDAGE PAR RESISTANCE ET PROCEDE DE COMMANDE ASSOCIE

(84) Benannte Vertragsstaaten:
**DE**

(30) Priorität: **12.07.2001 DE 10133297**

(43) Veröffentlichungstag der Anmeldung:
**21.04.2004 Patentblatt 2004/17**

(73) Patentinhaber: **KUKA Schweissanlagen GmbH 86165 Augsburg (DE)**

(72) Erfinder:
  • **DIETRICH, Simon 86169 Augsburg (DE)**
  • **RIPPL, Peter 86163 Augsburg (DE)**

(74) Vertreter: **Ernicke, Klaus Stefan Patentanwälte Ernicke & Ernicke, Schwibbogenplatz 2b 86153 Augsburg (DE)**

(56) Entgegenhaltungen:
  **EP-A- 0 644 014        EP-A- 1 005 943
  EP-A- 1 118 417        DE-A- 19 917 896**

  • **PATENT ABSTRACTS OF JAPAN vol. 1998, no. 09, 31. Juli 1998 (1998-07-31) & JP 10 094882 A (TOYOTA MOTOR CORP), 14. April 1998 (1998-04-14)**

**Beschreibung**

Die Erfindung betrifft eine elektrische Widerstandsschweißeinrichtung, vorzugsweise eine elektrische Punktschweißeinrichtung, und ein Verfahren zu deren Steuerung, insbesondere Kalibrierung, mit den Merkmalen in den Oberbegriffen des Verfahrens- und Vorrichtungshauptanspruchs.

Eine solche Widerstandsschweißvorrichtung ist aus der Praxis bekannt. Die Widerstandsschweißeinrichtung ist stationär angeordnet oder wird von einem Roboter oder einem anderen Manipulator bewegt. Sie besitzt eine Schweißzange mit in der Regel zwei Elektrodenarmen, von denen einer relativ ortsfest und der andere relativ beweglich angeordnet ist und mittels eines Armantriebs nebst einer Steuerung bewegt wird. An den Enden der Elektrodenarme sitzen geeignete Elektroden mit austauschbaren Elektrodenkappen. Der Armantrieb ist kraftoder momentengesteuert. Hierfür wird in der Regel der Motorstrom gemessen. Bei einer solchen Kraft- oder Momentensteuerung ist es schwer die an den Elektroden wirkenden Elektrodenkräfte genau zu bestimmen und einzuhalten.

Die EP 1 005 943 A2 befasst sich mit Sensoren und auch mit einem Kalibrierverfahren für diese Sensoren, wobei es um den Ermittlung der beim Schweißen wirkenden Elektrodenkraft geht. Hierbei sind allerdings die Sensoren nur an den beiden Zangenarmen angeordnet. Zwischen den Elektroden befindet sich kein Sensor. Die Sensoren können nach verschiedenen Verfahren kalibriert werden. Bei der ersten Kalibriermethode werden die Zangenarme geöffnet und die Elektrodenenden voneinander distanziert. Es sollen dann die Referenzpunkte einer Presskraft und einer Positionsinformation des am festen Zangenarm angebrachten Sensors kalibriert werden und zwar basierend auf dem Output des anderen Sensors am beweglichen Zangenarm und des Stromoutputs des Servomotors. Mit diesem Kalibrierschritt kann man nur die Endpositionen der Zangenarme in der Öffnungsstellung kalibrieren. Eine Kalibrierung der Sensoren selbst ist hierdurch nicht möglich. Beim zweiten Kalibrierverfahren werden die Elektrodenspitzen zusammengedrückt, wobei der Kontaktpunkt referiert wird und anschließend beim weiteren Zusammenpressen der Elektrodenspitzen eine Kraftkurve und eine Positionsinformation ausgegeben werden. Die Kraftmessungen basieren aber auf den Messwerten der Sensoren, so dass man allenfalls feststellen kann, welche Kraftwerte von den Sensoren bei welcher Zangenposition bzw. welcher Motorstellung ausgegeben werden. Die Sensoren selbst kann man auf diesen Wege jedoch nicht kalibrieren. Insbesondere kann man nicht feststellen, wie groß tatsächlich die zwischen den Elektrodenspitzen wirkende Kraft ist. Der Sensor ist zwar als Kraftmesser ausgebildet, wobei die über das Armteil eingeleitete Kraft über eine Dehnung oder eine Verformung am Armteil gemessen wird. Bei dieser Methode gehen allerdings die Federwirkungen und Verformungen zwischen der Sensorposition und Elektrodenspitze ein, so dass man nicht feststellen kann, wie die Beziehung zwischen den Sensorsignalen und der tatsächlich zwischen den Elektroden wirkenden Elektrodenkraft ist. Der andere Sensor hat einen noch größeren Abstand von der Elektrodenspitze und ist zudem als Positionssensor ausgebildet, der die Drehstellung des Servomotors misst. Auf Grund dieser Umstände ist es nicht möglich, die Schweißzange auf die Erzeugung einer ganz bestimmten und größenmäßig festgelegten Elektrodenkraft zu kalibrieren.

Die JP 10094882 A offenbart eine ähnliche Vorgehensweise wie die EP 1 005 943 A2, wobei wiederum zum Kalibrieren die beiden Elektrodenspitzen in Kontakt gebracht und zusammengedrückt werden. Durch die hierbei auftretende Presskraft F soll die Belastung des einen Zangenarmes durch Messung des rapide ansteigenden Stroms im Servomotor gemessen werden. Zugleich wird die Motordrehung gemessen. Bei diesem Kalibrierverfahren lässt sich aber die tatsächlich wirkende Elektrodenkraft nicht größenmäßig bestimmen. Über den Motorstrom kann man ohnehin die auftretenden Kraftänderungen nur unzureichend erfassen, zumal zwischen Motor und Elektrode die in ihrer Größe unbekannten Federelastizitäten des Zangenarms liegen.

Es ist Aufgabe der vorliegenden Erfindung, eine bessere Widerstandsschweißeinrichtung nebst Verfahren zu deren Steuerung und insbesondere Kalibrierung aufzuzeigen.

Die Erfindung löst diese Aufgabe mit den Merkmalen im Verfahrens- und Vorrichtungshauptanspruch. Mit dem Kalibierverfahren nebst Kalibriervorrichtung können zum einen die Schweißzange bzw. deren Armantrieb nach der wahren Elektrodenkraft kalibriert werden. Bei einer über Kraftmesser an der Schweißzange direkt kraftgesteuerten oder kraftgeregelten Schweißzange können die Kraftmesser auf die tatsächlich wirkende Elektrodenkraft kalibriert und geeicht werden. Bei einer positionsgesteuerten oder positionsgeregelten Schweißzange entsprechen im Schweißbetrieb die eingestellten Positionen des Armantriebs durch die Kalibrierung exakt der gewünschten Elektrodenkraft. Für die Kalibrierung eignet sich besonders ein stationärer oder bewegter Kraftsensor, auf den die bewegte oder stationäre Schweißzange geschlossen wird.

Eine Positionssteuerung des Armantriebs hat den Vorteil, dass die Widerstandsschweißeinrichtung besser und genauer gesteuert werden kann. Insbesondere können die Federelastizitäten der Schweißzange zwischen Armantrieb und Elektroden kompensiert werden. Hierdurch lässt sich auch eine ganz bestimmte gewünschte Elektrodenkraft genau einstellen.

Die Positionssteuerung schafft die Voraussetzung für eine schnelle und genaue Elektrodenkraftsteuerung, wobei auch Kraftprofile gefahren werden können. Insbesondere kann die Elektrodenkraft während des Prozesses auch reduziert werden..Die Positionssteuerung eignet sich für beliebige Arten von Armantrieben, wobei besondere Vorteile für einen elektromotorischen Antrieb bestehen. Die Positionssteuerung kompensiert ferner automatisch und schnell die Streuung der mechanischen Eigenschaften des Zangensystems, das heißt geometrische Toleranzen, mechanische Reibung, mechanisches Spiel und dergleichen. Ferner werden die durch Temperatureinfluss verursachten Änderungen der mechanischen Eigenschaften des Zangensystems automatisch und schnell kompensiert. Gleiches gilt für Änderungen, die durch Alterung und/oder Verschleiß verursacht sind. Auch normale Zustandsänderungen, wie z.B. Längenänderungen der Elektrodenkappen durch Abnutzung bzw. Verschleiß oder in Folge eines Abfräsens werden berücksichtigt.

Die Positionssteuerung für die Schweißzange kann bei beliebigen Arten von solchen Geräten oder Zangensystemen eingesetzt werden, wobei diese auch beliebig stationär oder beweglich angeordnet sein können. Besondere Vorteile bestehen bei einer robotergeführten Widerstandsschweißeinrichtung. Hierbei ist es außerdem günstig, wenn auf die Robotersteuerung zurückgegriffen werden kann, in dem die Positionssteuerung mit dieser Robotersteuerung verbunden oder sogar in diese integriert ist. Dies erlaubt ein sehr schnelles Messen der aktuellen Antriebs- oder Motorposition und eine schnelle und direkte Berechnung der Daten und deren Umsetzung in Steuer- und Bewegungsbefehle.

Im weiteren kann auch eine Kalibrierung nach dem Verschleiß der Elektroden vorgenommen werden, wobei Elektrodenabbrand und andere Verkürzungen der Elektroden aufgenommen und bei der Positionssteuerung im Schweißbetrieb berücksichtigt werden.

In einem weiteren Schritt kann eine Anpassung nach der Position und auch den Abmessungen des Werkstückes durchgeführt werden, wobei zusätzlich zur Schweißzange bzw. zu deren Armantrieb auch die Positioniervorrichtung, z.B. ein Roboter, in seinen Zustellbewegungen kalibriert wird. Auf die bisher nötigen Zangenausgleichssysteme kann hierdurch verzichtet werden. Die Anpassungsschritte unter Verschleißaufnahme der Elektroden und nach der Position bzw. den Abmessungen eines Werkstückes lassen sich vorteilhaft in Verbindung mit beliebigen Armantrieben einsetzen.

Durch das kostengünstige Anpassverfahren und die Anpassvorrichtung kann auf kostspielige, bau-, platz- und steueraufwändige Zangenausgleichssysteme verzichtet werden. Die erforderliche schweißgerechte Relativposition von Schweißzange und Werkstück lässt sich schneller und genauer als mit einem Zangenausgleichssystem vom Roboter sensorgestützt über einen detektierten Werkstückkontakt oder Abstand suchen und anfahren. An jedem Schweißpunkt ist eine eigene und vollautomatische Positionsanpassung durchführbar. Zudem können die bisherigen Fehlereinflüsse durch unterschiedliche Orientierungen sowie Positionen der Schweißzange und entsprechend unterschiedliche Gewichtseinflüsse automatisch und exakt kompensiert werden. Gleiches gilt für die beim Stand der Technik bisher nicht erfassten Änderungen bei Form und Größe der Elektroden und deren Einfluss auf die Schweißung. Bei Entfall des Zangenausgleichssystems kann die Schweißzange mechanisch starr mit dem Handflansch des Roboters verbunden werden, wobei der feststehende Elektrodenarm und die dazu gehörige Elektrode fest relativ zum Handflansch sind. Für die konstruktive Gestaltung und die Funktion der Anpassvorrichtung gibt es verschiedene Möglichkeiten. Hierbei ist auch eine Umrüstung oder Nachrüstung vorhandener Schweißzangen möglich.

Das Anpassverfahren und die Anpassvorrichtung können außerdem mit Vorteil für weitere Zwecke eingesetzt werden. Zum einen lassen sich die Werkstücke in ihrer Position und ihren Abmessungen sowie ihrer Geometrie exakt und automatisch vermessen, wobei die Messdaten dokumentiert, gespeichert und auf unterschiedliche Weise ausgewertet werden können. Der Roboter mit dem geführten Teil, vorzugsweise der Schweißzange, wird somit während der Produktion online zur Messmaschine umfunktioniert. Hierdurch lassen sich gezielt und nachweisbar die Schweißqualität und die Bauteilgüte optimieren.

In den Unteransprüchen sind vorteilhafte Ausgestaltungen der Erfindung angegeben.

Die Erfindung ist in den Zeichnungen beispielsweise und schematisch dargestellt. Im einzelnen zeigen:

Figur 1: eine Schweißstation mit mehreren Widerstandsschweißeinrichtungen und Robotern sowie Kalibriereinrichtungen in perspektivischer Ansicht,

Figur 2: eine Widerstandsschweißeinrichtung mit Roboter, Werkstück und Serviceeinrichtung mit Kalibriereinrichtung in Seitenansicht,

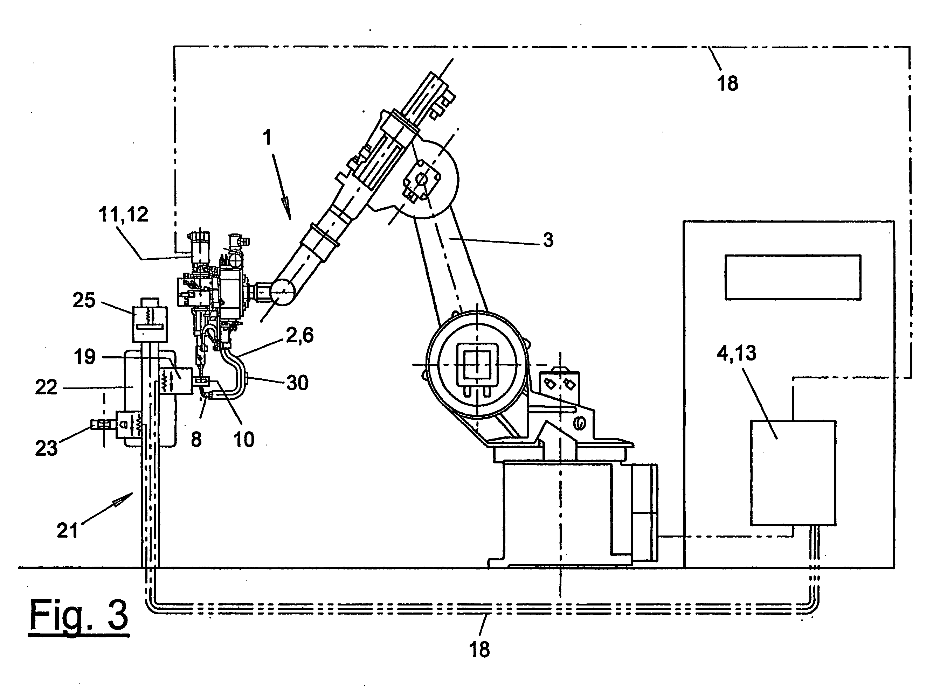

Figur 3: die Anordnung von Figur 2 mit dem Roboter in Kalibrierstellung,

Figur 4: eine Seitenansicht einer C-Schweißzange mit einem festen und einem beweglichen Zangenarm,

Figur 5: eine X-Schweißzange in Seitenansicht,

Figur 6: eine Schemadarstellung der Zangenkalibrierung mit einem Sensor,

Figur 7:      eine Darstellung der Elektrodenlage an einem Werkstück,

Figur 8 bis 12:      Diagramme zu den einzelnen Schritten bei der Zangenkalibrierung,

Figur 13 und 14:      eine Elektrodenzange in berührender Anpassposition an zwei verschiedenen Werkstücken,

Figur 15:      eine Variante mit Abstandsmessung und

Figur 16:      eine schematische Darstellung einer Schaltung zur Zangenanpassung mit Kontaktsensorik.

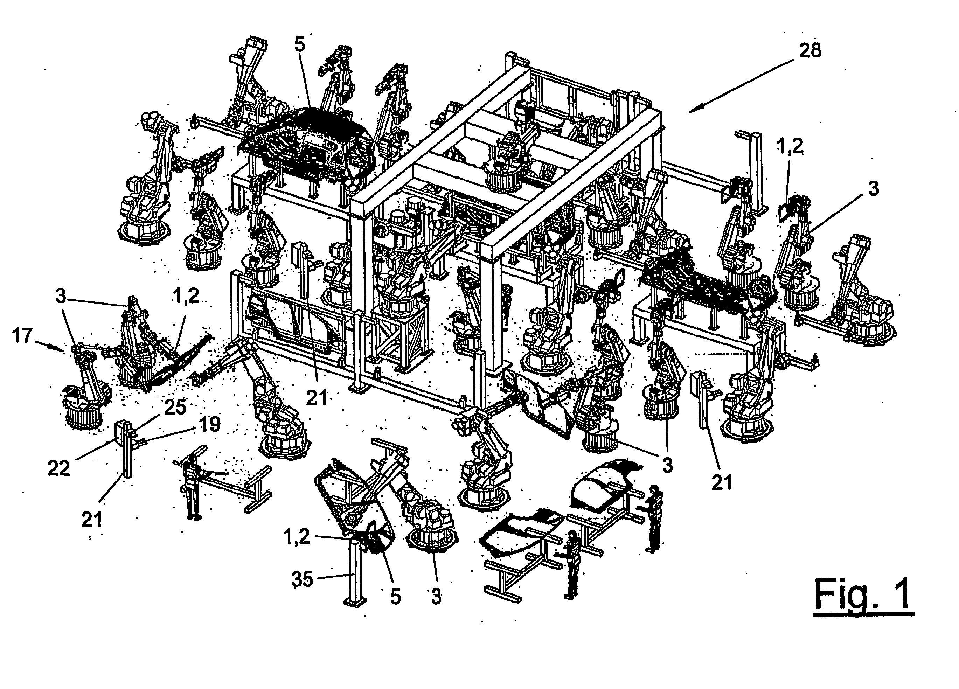

Figur 1 zeigt eine Bearbeitungsstation (28) für Werkstücke (5), die in diesem Fall als Rohkarosserien von Kraftfahrzeugen ausgebildet sind. Die Bearbeitung der Karosserien erfolgt unter anderem durch elektrisches Widerstandspunktschweißen mittels mehrerer Widerstandsschweißeinrichtungen (1). Hierbei kommen mehrere Schweißroboter (3) zum Einsatz, die an ihrer Roboterhand Schweißzangen (2) der nachstehend näher beschriebenen Art tragen. Außerdem können ein oder mehrere stationäre Widerstandsschweißeinrichtungen (1) mit stationären Schweißzangen (2) vorhanden sein, wobei das Werkstück (5) relativ zur Schweißzange (2) von einem Roboter (3) bewegt wird. Derartige stationäre Schweißzangen werden bisweilen auch als Schweißklemmen bezeichnet. In Figur 1 zeigt diese Anordnung im unteren mittleren Bildbereich. In vorzugsweise allen Fällen findet eine robotergeführte Relativbewegung zwischen Werkstück (5) und Schweißzange (2) statt.

Die Schweißzangen (2) sind mit mehreren, üblicherweise zwei relativ zueinander beweglichen Zangenarmen (6, 7) ausgerüstet, die an den Enden jeweils eine Elektrode (8) tragen und von einem Armantrieb (11) bewegt werden. Die Elektroden (8) können austauschbare Elektrodenkappen (9) besitzen.

Bei derartigen Schweißzangen (2) ist eine optimale elektrische Widerstandspunktschweißung nur dann erzielbar, wenn die Elektroden (8) von beiden Seiten zum richtigen Zeitpunkt, an der richtigen Stelle und mit der richtigen Kraft auf das Werkstück (5) einwirken, welches üblicherweise zwei oder mehr aufeinander liegende Blechlagen (14,15) besitzt. Die Blechlagen (14,15) werden zwischen den Elektroden (8) unter Einwirkung der sogenannten Elektrodenkraft zusammengepresst, wobei es vor allem darauf ankommt, dass an der Kontaktstelle zwischen den Blechen (14,15) die korrekte Elektrodenkraft wirkt, weil hier das Material durch die Erwärmung des Schweißstromes schmelzen und eine Schweißlinse bilden soll.

Aus diesen Erfordernissen ergeben sich für eine Schweißzange (2) zwei Grundprobleme, nämlich einerseits der richtige Positionierhub und andererseits der korrekte Schließhub. Beim Positionierhub muss die korrekte Relativposition zwischen der geöffneten Schweißzange (2) und dem Werkstück (5) gefunden werden, wobei im anschließenden Schließhub die Zangenarme (6, 7) und die Elektroden (8) in die korrekte Kontakt- und Krafteinwirkungsposition zum Werkstück (5) gebracht werden müssen. Beim Positionierhub werden entweder die Schweißzange (2) oder das Werkstück (5) oder auch beide durch einen Roboter (3) geführt. Zur Erzielung einer korrekten Schweißung sieht die Erfindung das nachfolgend näher beschriebene Kalibrierverfahren nebst Kalibriervorrichtung (19) für den Schließhub und ein Anpassverfahren nebst Anpassvorrichtung (17) für den Positionierhub vor.

In der Bearbeitungsstation oder Schweißstation (28) können ein oder mehrere Serviceeinrichtungen (21) für die Schweißroboter (3) vorhanden sein. Diese beinhalten die Kalibriervorrichtung (19) für die Schweißzangen (2) und weitere nachstehend nähere beschriebene Komponenten.

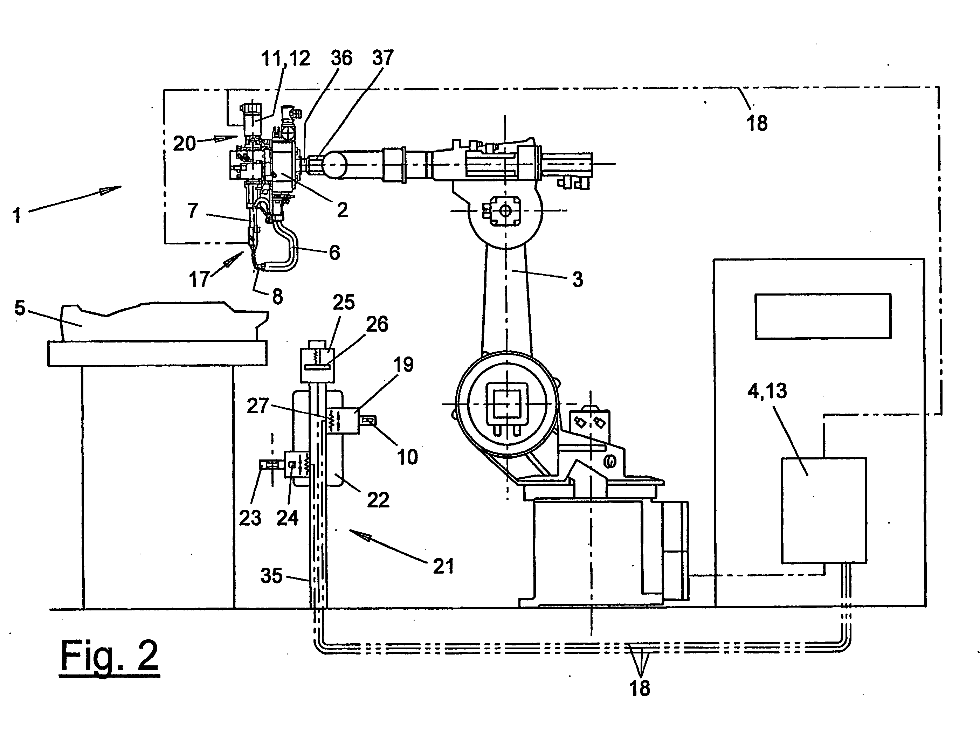

In Figur 2 ist eine Widerstandsschweißeinrichtung (1) schematisch dargestellt. Sie beinhaltet eine bewegte Schweißzange (2), die von einem mehrachsigen Schwenkarm-Roboter (3) mittels einer Robotersteuerung (4) gegenüber einem Werkstück (5) bewegt wird. Anstelle eines Roboters (3) kann auch ein anderer beliebiger ein- oder mehrachsiger Manipulator zum Bewegen und Positionieren der Schweißzange (2) eingesetzt werden.

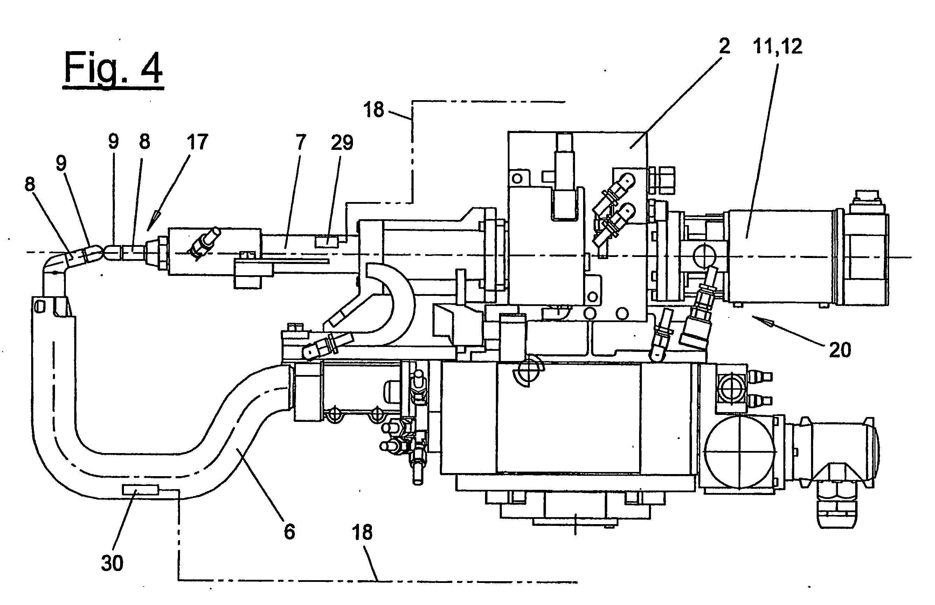

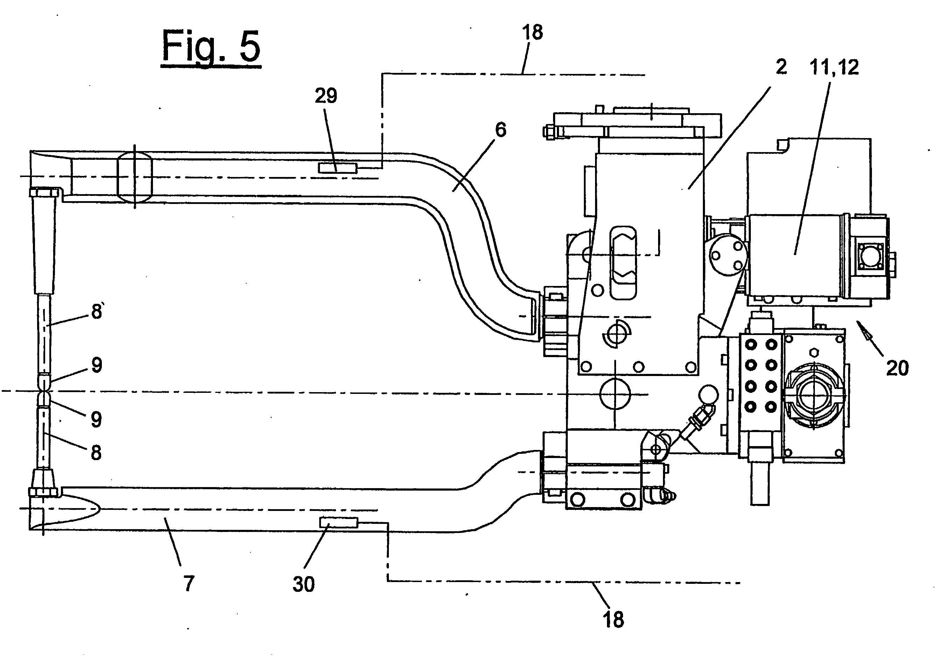

Figur 4 und 5 zeigen zwei unterschiedliche Ausführungsformen einer Schweißzange (2). In Figur 4 ist eine sog. C-Zange und in Figur 5 eine X-Zange dargestellt. In der Ausführungsform der C-Zange von Figur 4 ist der eine Elektroden- oder Zangenarm (6) relativ ortsfest am Zangengehäuse befestigt. Der andere Zangenarm (7) ist relativ zum ersten Zangenarm (6) beweglich, z.B. linear verschieblich gelagert und wird vom Armantrieb (11) beaufschlagt. In der Variante von Figur 5 sind beide Zangenarme (6,7) der X-Zange beweglich und vorzugsweise drehbar am Zangengehäuse gelagert und werden beide vom Armantrieb (11) beaufschlagt. Der eine Zangenarm, üblicherweise der untere Zangenarm (7), kann zumindest temporär relativ ortsfest zum Zangengehäuse bzw. zur Hand des Roboters gespannt werden. In beiden Ausführungsformen ist die Schweißzange (2) über eine geeignete Anschlussplatte an der Hand des Roboters (3) befestigt.

Der Armantrieb (11) besitzt einen geeigneten Motor, vorzugsweise einen Elektromotor und ggf. auch ein Getriebe. Alternativ kann der Armantrieb (11) auch in beliebig anderer Weise ausgebildet sein, z.B. als pneumatischer, hydraulischer, pneumohydraulischer oder sonstiger Antrieb. Der Armantrieb (11) hat ferner eine Positionsmesseinrichtung (12), die in geeigneter Weise ausgebildet und an geeigneter Stelle des Armantriebs (11) angeordnet ist. Sie kann z.B. als Drehgeber ausgebildet sein, der in den Elektromotor (11) integriert oder direkt an der Abtriebswelle angeordnet ist. Die Positionsmesseinrichtung (12) misst vorzugsweise Drehwinkel, kann alternativ aber auch Wege messen.

Zum Widerstandsschweißen wird das Werkstück (5), das z.B. aus zwei oder mehr Blechlagen (14,15) besteht, zwischen den Elektroden (8) bzw. Elektrodenkappen (9) der Zangenarme (6,7) eingespannt. Die beiden Elektroden (8) üben hierbei vorzugsweise eine bestimmte Elektrodenkraft auf das Werkstück (5) aus. Der Schweißvorgang erfolgt durch Aufschalten von Schweißstrom mit geeigneter Höhe und Dauer, wobei der Stromverlauf gegebenenfalls verändert und z.B. mit einem sogenannten Stromprogramm variiert wird. Außerdem kann die Elektrodenkraft sich vor, während und nach dem Schweißvorgang verändern und insbesondere verringern, was nach einem Kraftprogramm ablaufen kann. Diese Veränderungen sind prozeßabhängig und lassen sich mit der gezeigten Widerstandsschweißeinrichtung (1) verwirklichen.

Die Bewegungen der Zangenarme (6,7) und der Armantrieb (11) können wahlweise nach der Kraft oder der Position bzw. dem Weg gesteuert oder geregelt erfolgen.

Bei einer echten Kraftregelung ist die Elektrodenkraft prinzipbedingt unabhängig von der Blechstärke und von den Blechtoleranzen. Für eine Kraftregelung der Schweißzange (2) sind an geeigneter Stelle im Kraftkreis der Schweißzange (2), z.B. an ein oder beiden Zangenarmen (6,7), ein oder mehrere Kraftmesser (29,30) angeordnet. In den gezeigten Ausführungsbeispielen von Figur 4 und 5 befinden sich die Kraftmesser (29,30) mit Distanz zu den Elektroden an den Zangenarmen (6,7) und sind in geeigneter Weise, z.B. als Dehnungsaufnehmer, piezoelektrischer Druckaufnehmer oder dgl. gestaltet. Alternativ kann auch nur ein Kraftmesser (29) vorhanden sein, der vorzugsweise am bewegten Zangenarm (6) angebracht ist. In weiterer Abwandlung können die Kraftmesser (29,30) auch an beliebigen anderen Stellen der Schweißzange (2), z.B. im Armantrieb (11) oder in der Nähe der Elektroden (8) positioniert sein.

Der Armantrieb (11) besitzt eine geeignete rechnergestützte Steuerung (13). Die Steuerung (13) kann als eigenständige Steuerung ausgeführt und der Schweißzange (2) extern zugeordnet oder in diese bzw. den Armantrieb (11) integriert sein. In der bevorzugten Ausführungsform ist die Steuerung (13) mit der Robotersteuerung (4) verbunden und kann insbesondere in diese integriert sein.

Der oder die Kraftmesser (29,30) sind über eine geeignete Leitung (18) mit der Steuerung (13) verbunden. In der Steuerung (13) ist ein analoger oder digitaler Kraftregler integriert.

Bei einer positionsgesteuerten bzw. -geregelten Schweißzange (2) ist die Steuerung (13) über eine Leitung (18) mit der Positionsmesseinrichtung (12), z.B. dem Drehgeber, verbunden. Ein elektromotorischer Armantrieb (11) kann ferner eine integrierte Messeinrichtung (20) für den Motorstrom bzw. das hierdurch repräsentierte Motormoment aufweisen. Diese Messeinrichtung (20) ist ebenfalls über eine Leitung (18) mit der Steuerung (13) verbunden.

Über die Positionssteuerung (13) führen die Zangenarme (6,7) bestimmte translatorische und/oder rotatorische Bewegungen zueinander aus, die über den Verschiebeweg bzw. den Drehwinkel des Antriebs (11) und insbesondere des Elektromotors bestimmt sind und mit der Positionsmesseinrichtung (12) gemessen, angesteuert und kontrolliert werden. Über die Positionsmesseinrichtung (12) und deren Rückmeldungen an die Steuerung (4) ist auch eine Positionsregelung der Zangenarme (6,7) und ihrer Elektroden (8) möglich, indem der Armantrieb (11) einen oder beide Zangenarme (6,7) solange bewegt, bis die von der Steuerung (13) vorgegebene Position erreicht ist.

Durch die Positionssteuerung bzw. Positionsregelung der Zangenarme (6,7) und der Elektroden (8) werden unbekannte und sich verändernde mechanische Faktoren im Antriebsstrang, z.B. Haft- und Gleitreibung, mechanisches Spiel und dergleichen sowie die Federelastizität der Zangenarme (6,7) kompensiert. Derartige Widerstände werden bei Auftreten durch eine höhere Stromaufnahme und ein höheres Drehmoment des Antriebsmotors (11) überwunden.

Bei einer Kraftregelung der Schweißzange (2) werden die Elektrodenarme (6,7) nach dem Werkstückkontakt in Abhängigkeit von der mittels den Kraftmessern (29,30) gemessenen Kraft so aufeinander zu bewegt, dass eine gewünschte Elektrodenkraft an der Schweißstelle entsteht. Die von den Kraftmessern (29,30) ermittelte Kraft ist proportional zu der an der Elektrode (8) des jeweiligen Zangenarms (6,7) entwickelten anteiligen Elektrodenkraft, wobei Federelastizitäten und dergleichen andere im Bereich zwischen Elektrode (8) und Kraftmesser (29,30) einwirkenden äußeren Veränderungsfaktoren beim Proportionalverhältnis berücksichtigt sind. Sie können durch die nachfolgend näher beschriebene Kalibrierung ermittelt werden.

Beim elektrischen Widerstandsschweißen entsteht das Problem, dass für eine gute Schweißqualität beide Elektroden zu Beginn des Schweißprozesses guten Kontakt mit dem Werkstück (5) haben sollen, wobei sich außerdem die Schließkraft des Armantriebs (11) gleichmäßig auf beide Zangenarme (6,7) verteilt, so dass beide Elektroden (8) mit im wesentlichen der gleichen Kraft an das Werkstück (8) gedrückt werden. Wichtig ist vor allem, dass die gewünschte Elektrodenkraft zwischen den zwei oder mehr Blechlagen (14,15) des Werkstücks (5) wirkt. Wenn durch Fehlpositionierungen zwischen Werkstück (5) und Schweißzange (2) nur eine der beiden Elektroden den erforderlichen Kontakt mit dem Werkstück (2) hat, ist die an der Schweißstelle wirkende Elektrodenkraft unzureichend mit der Folge einer mangelhaften Schweißung.

Nachfolgend werden das Kalibrierverfahren und eine zugehörige Kalibriervorrichtung (19) für die Widerstandsschweißeinrichtung (1) bzw. deren Armantrieb (11) beschrieben. Hierbei lassen sich die Kraftregelung und/oder die Positionssteuerung oder -regelung der Schweißzange (2) und andere Dinge kalibrieren.

Die Kalibriervorrichtung (19) besteht aus einem geeigneten Sensor, insbesondere einem Kraftsensor (10), z. B. einem piezo-elektrischen Druckaufnehmer, der zwischen die Spitzen der Elektrodenkappen (9) der schließenden Schweißzange (2) eingespannt werden kann und der die dabei zwischen den Elektrodenkappen (9) auftretende Elektrodenkraft unmittelbar misst. Der Kraftsensor (10) ist vorzugsweise mit einer elektronischen Auswerteeinrichtung kombiniert, welche Kraftsignale über eine Leitung (18) abgeben kann.

Die Kalibriervorrichtung (19) kann Bestandteil einer Serviceeinrichtung (21) sein, die sich im Arbeitsbereich von ein oder mehreren Schweißrobotern (3) befindet. Diese Ausbildung ist vor allem für mobile und vom Roboter (3) geführte Schweißzangen (2) von Vorteil. Für die Kalibrierung stationärer Schweißzangen (2) kann die Kalibriervorrichtung (19) mobil sein und wird vom Roboter (3) zur Schweißzange (2) bewegt.

Die Serviceeinrichtung (21) kann noch weitere Komponenten beinhalten und hat einen vorzugsweise gemeinsamen Ständer (35) oder ein Gestell, an dem diese Teile derart verteilt angeordnet sind, dass sie vom Schweißroboter (3) mit der Schweißzange (2) gut erreicht werden können. Die Serviceeinrichtung (21) kann als zusätzliche Komponente z.B. eine Kappenwechselvorrichtung (22) und eine Kappenfräsvorrichtung (23) besitzen. Die Kappenfräsvorrichtung (23) kann eine integrierte oder externe Kappenkontrollvorrichtung (24) besitzen, mit der das Fräsergebnis der Elektrodenkappe (9) kontrolliert und vermessen wird. Ferner kann die Serviceeinrichtung (21) eine Kalibriervorrichtung (25) für den TCP (tool center point), z.B. die Spitze der Elektrodenkappe (9) am festen Zangenarm (6), der Schweißzange (2) aufweisen. Diese kann z.B. einen Messkontakt (26) mit bekannter absoluter Position aufweisen, der vom Roboter (3) mit der Elektrodenkappe (9) unter Nutzung der nachfolgend beschriebenen Anpassvorrichtung (17) berührt wird, wobei zeitgleich mit der Berührung die Roboterposition gespeichert und aus der Differenz von Soll- und Istposition ein Korrekturfaktor für die TCP-Lage berechnet und in der Robotersteuerung (4) gespeichert wird. Alternativ kann die Kalibriervorrichtung (25) eine optische Vermessungseinheit oder dgl. sein.

Die Kalibriervorrichtung (19), die Kappenfräsvorrichtung (23) und die Kalibriervorrichtung (25) können über eine federnde Lagerung (27) in Anfahrrichtung des Roboters (3) ausweichfähig am Ständer (35) angeordnet sein. Die Kalibriervorrichtungen (19,25) und die Kappenkontrollvorrichtung (24) können über elektrische Leitungen (18) mit der Steuerung (13) und/oder der Robotersteuerung (4) verbunden sein.

In einem ersten Kalibrierschritt wird die Widerstandsschweißeinrichtung (1) bzw. deren Schweißzange (2) mit der Kalibriervorrichtung (19) nach der Elektrodenkraft kalibriert. Schweißzangen (2) benötigen bei der Inbetriebnahme und dann auch später zyklisch in der Produktion Kalibriervorgänge.

Mit der Kalibriervorrichtung (19) können zum einen der oder die Kraftmesser (29,30) kalibriert werden. Hierbei wird z.B. die Schweißzange (2) auf den Kraftsensor (10) geschlossen, der Messsignale abgibt, welche die tatsächlich wirkende Elektrodenkraft repräsentieren. Hierbei speichert z.B. die Steuerung (4,13) bei der positiven Flanke eines ersten Signals $OUT_1$ des Kraftsensors (10) zeitgleich den von dem/den Kraftmesser (n) (29,30) an der Schweißzange (2) kommenden Kraft-Istwert $F_{Ist1}$. Bei der positiven Flanke eines zweiten Signals $OUT_2$ speichert die Steuerung (13) zeitgleich den von dem/den Kraftmesser(n) (29,30) übermittelten Kraft-Istwert $F_{Ist2}$. Dementsprechend kann mit weiteren OUT-Signalen verfahren werden. Die Steuerung (4,13) vergleicht die Messwerte und berechnet anschließend automatisch (Auto-Kalibrierung) eine neue Sensorkennlinie der Kraftmesser (29,30) basierend auf den vom Kalibrersensor (10) bekannten und exakt reproduzierbaren Kraftwerten in den Schaltpunkten ($F_1$ bzw. $F_2$) etc. und den gespeicherten Werten ($F_{Ist1}$ bzw. $F_{Ist2}$) etc., mit der im späteren Schweißbetrieb die Kraftmesswerte des/der Kraftmesser (29,30) oder deren Auswertung berichtigt wird.

Diese Kalibrierung kann während des Anlagenbetriebs mehrfach durchgeführt werden, um im Betrieb auftretende Veränderungen durch mechanischen Verschleiß, thermische Einflüsse, Veränderungen an den Elektrodenkappen (9) und dergleichen zeitnah zu kompensieren. Die Kalibriervorgänge können durch entsprechende Programme in der Robotersteuerung (4) bzw. der Steuerung (13) auch automatisiert werden. Beim Kappenwechsel oder beim Nachfräsen oder sonstigen Verändern der Elektrodenkappen (9) wird die Kalibrierung ebenfalls durchgeführt.

Bei der Kalibrierung einer Positionssteuerung oder -regelung der Schweißzange (2) können bestimmten Positionen des Armantriebs (11), z.B. bestimmten Drehstellungen des Ankers oder der Abtriebswelle, bestimmte Elektrodenkräfte zugeordnet werden. Der Kraftsensor (10) ist dabei konstruktiv so ausgelegt, dass sich seine Dimension und insbesondere seine Dicke $d_{sensor}$ in Richtung der Elektrodenkraft nicht oder nur vernachlässigbar unter Krafteinwirkung ändert. Diese Dimension und Dicke des Sensors ist bekannt.

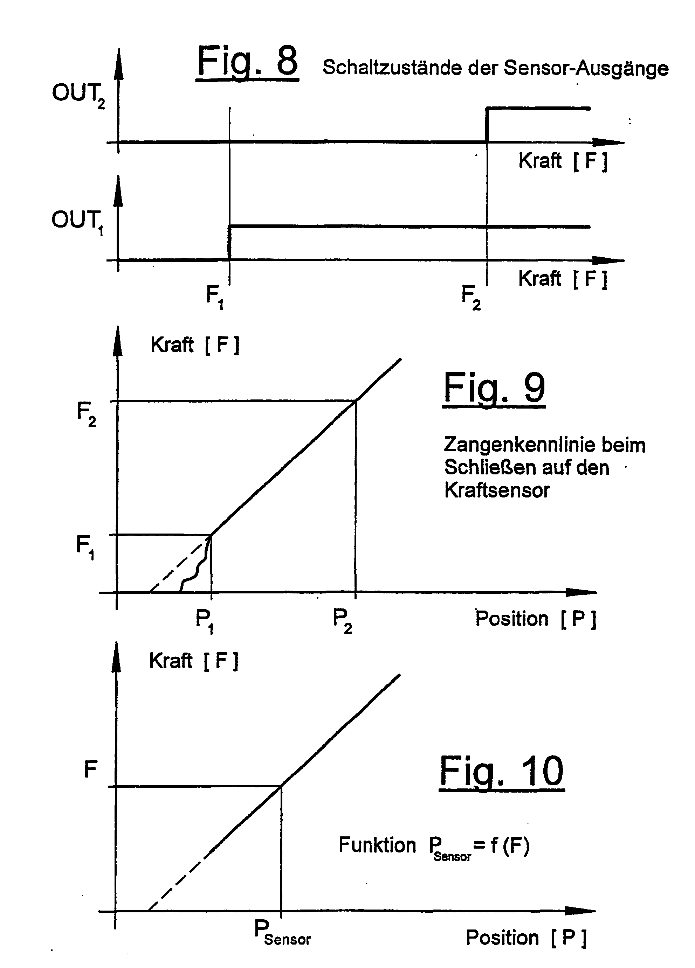

Der Kraftsensor (10) hat vorzugsweise zwei Schaltausgänge $OUT_1$ und $OUT_2$ , welche über Leitungen (18) mit der Steuerung (13) des Armantriebs (11) verbunden sind. Die beiden Schaltausgänge $OUT_1$ und $OUT_2$ schalten bei Überschreiten von zwei genau festgelegten Kraftwerten $F_1$ und $F_2$. Der Ausgang $OUT_1$ schaltet bei Überschreiten der Kraft $F_1$ und der Ausgang $OUT_2$ bei Überschreiten der Kraft $F_2$. Figur 8 zeigt im Diagramm diesen Sachverhalt.

Die beiden Ausgänge $OUT_1$ und $OUT_2$ des Kraftsensors (10) sind mit zwei flankengesteuerten Eingängen der Positionssteuerung (13) verbunden und bewirken im Schaltzustand, dass die Steuerung (13) automatisch und zeitgleich die zugehörige aktuelle Position bzw. den Drehwinkel des Antriebsmotors (11) speichert. Es wird also beim Erreichen der Elektrodenkraft $F_1$ die Position $P_1$ und bei Erreichen der Elektrodenkraft $F_2$ die Position $P_2$ gespeichert.

Figur 9 verdeutlicht die hierbei sich einstellende Zangenkennlinie beim Schließen derZangenarme (6,7) und ihrer Elektroden (8) auf den Kraftsensor (10).

Der Antriebsstrang der Schweißzange (2) vom Armantrieb (11) bis zu den Elektroden (8) bzw. Elektrodenkappen (9) stellt ein elastisches System dar, dessen Elastizität von unterschiedlichen Faktoren abhängig ist. Hier spielen zum einen Exemplarstreuungen, Temperatur und Wärmedehnung, Alterung des Materials, aktuelle Länge der Elektrodenkappen (9) (Abnutzung bzw. Verschleiß, Abfräsung etc.), mechanisches Spiel im Getriebe, Lagerungen etc. eine Rolle. Bei geschlossener Schweißzange (2) bewirkt' eine Änderung der Motorposition $\Delta P$ eine Änderung der Elektrodenkraft $\Delta F$ nach der Formel: $AF = k^*\Delta P$. Dies gilt allerdings in der Regel nach Überschreiten einer gewissen Elektrodenkraft, ab welcher das mechanische Spiel des Zangensystems Null ist.

Ausgehend hiervor ergibt sich beim Schließen der Schweißzange (2) auf den Kraftsensor (10) folgende in Figur 10 dargestellte Positionsfunktion, die für den linearen Bereich des Zangensystems gültig ist, wenn $F \geq F_1$ ist:

$$P_{Sensor}=F^*(P_2-P_1)/(F_2-F_1)+(P_1^*F_2-P_2^*F_1)/(F_2-F_1).$$

Ebenfalls bekannt ist der Übertragungsfaktor i der Schweißzange (2) im geöffneten Zustand. Er ist definiert als $i=\Delta P/\Delta S$ und betrifft die Positionsänderung des Antriebsmotors (11) im Verhältnis zur Änderung der Position der Elektroden (8) bzw. ihrer Elektrodenkappen (9). Die Stärke $d_{Blech}$ des Werkstücks (5) und der zu verschweißenden Blechlagen (14,15) ist ebenfalls für jeden Schweißpunkt bekannt.

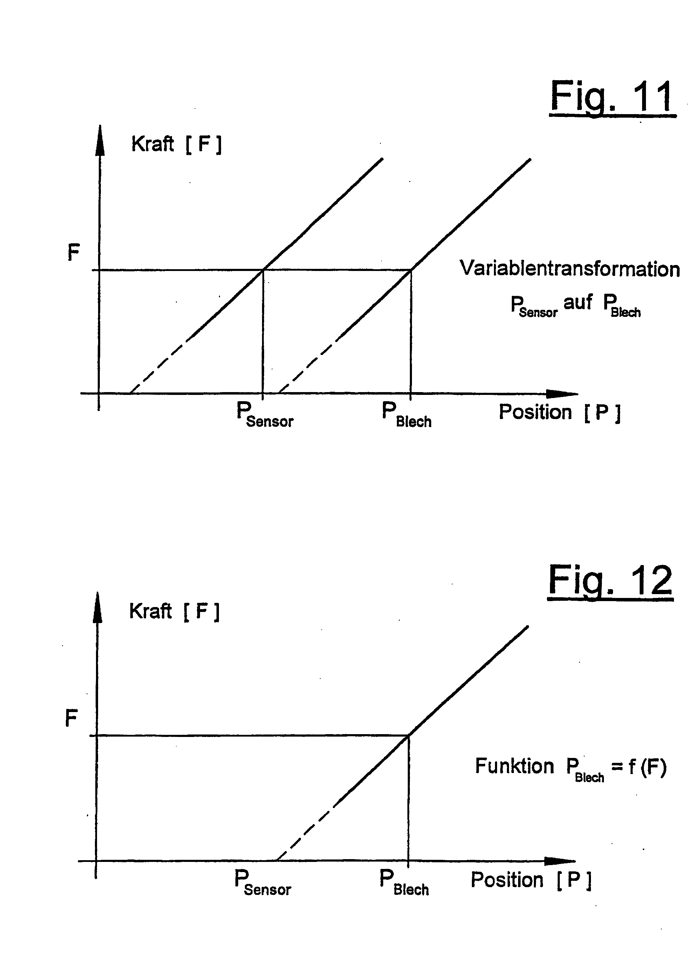

Um beim Schließen der Schweißzange auf die zu verschweißenden Bleche (14,15) die gleiche Elektrodenkraft F wie beim Schließen auf den Kraftsensor (10) zu erreichen, muß der Antriebsmotor (11) weiterdrehen um einen Wert $\Delta P$ entsprechend dem Unterschied zwischen der Stärke $d_{Sensor}$ des Kraftsensors und der Stärke $d_{Blech}$ der zu verschweißenden Bleche (14,15) gemäß der nachfolgenden und in Figur 11 dargestellten Formel bzw. Variablentransformation:

$$P_{Blech}=P_{Sensor}+\Delta P=P_{Sensor}+i^*\Delta S=P_{Sensor}+i^*(d_{Sensor}-d_{Blech}).$$

Aus den vorigen Gleichungen ergibt sich die Positionsfunktion $P_{Blech} = f(F)$, wie sie in Figur 12 dargestellt ist:

$$P_{Blech}=F^*(P_2-P_1)/(F_2-F_1)+(P_1^*F_2-P_2^*F_1)/(F_2-F_1)+i^*(d_{Sensor}-d_{Blech}).$$

Mit folgenden Notierungen kann die vorige Gleichung umgeschrieben werden:

$$a=(P_2-P_1)/(F_2-F_1)$$

$$b=(P_1^*F_2-P_2^*F_1)/(F_2-F_1)+i^*d_{Sensor}.$$

$$P_{Blech}=a^*F+b-i^*d_{Blech}.$$

Der Faktor a und der Term b werden von der Positionssteuerung (13) des Antriebsmotors (11) nach jeder Kalibrierung automatisch berechnet. Mit folgender Notierung kann die vorige Gleichung nochmals umgeschrieben werden:

$$c=b-i^*d_{Blech}$$

$$P_{Blech}=a^*F+c$$

Der Term c wird vorzugsweise vor jedem Schweißpunkt automatisch und neu berechnet. Die Positionssteuerung (13) oder die Robotersteuerung (4) verfügt über einen Funktionsgenerator, welche die Funktion $P_{Blech}=f(F)$ während des Schweißbetriebs automatisch berechnet und den Wert $P_{Blech}$ an die Positionssteuerung als Positionssollwert ausgibt.

Der vorgenannte Kalibriervorgang wird bei jedem Wechsel der Schweißzange (2) erneut durchgeführt. Er kann außerdem nach jedem Fräsen der Elektrodenkappen (9) wiederholt werden. Zur besseren Kompensation von wärmebedingten Elastizitätsänderungen kann der Kalibriervorgang auch zu ein oder mehreren verschiedenen Zeitpunkten während des Schweißbetriebs wiederholt werden. Ein Austausch der Elektroden (8) oder die Neubestückung mit Elektrodenkappen führt ebenfalls zu einem erneuten Kalibriervorgang.

Die Kalibrierung kann zusätzlich oder alternativ auch einen anderen Kalibriervorgang beinhalten, mit dem der Elektrodenverschleiß kompensiert wird. Dieser Kalibriervorgang wird zunächst bei neuen und unbenutzten Elektroden (8) und Elektrodenkappen (9) durchgeführt. Hierbei wird die Schweißzange (2) mit einer vorgewählten Geschwindigkeit geschlossen, wobei die Elektroden (8) bzw. ihre Elektrodenkappen (9) einander direkt berühren. Im Moment der Kappenberührung steigt der Motorstrom, was durch die Messeinrichtung (20) ermittelt wird. Die Steuerung (13) triggert auf diesen Stromanstieg, wobei zugleich von der Positionsmesseinrichtung (12) die zugehörige Position des Armantriebs (11) gemeldet und gespeichert wird. Durch Positionsvergleich erhält man hieraus den zum Schließen der Schweißzange (2) bei neuen Elektrodenkappen erforderlichen Weg ohne Werkstück (5) bzw. Bleche (14,15). Alternativ kann die Messung auch über den/die Kraftmesser (29,30) und den ermittelten Kraftanstieg durchgeführt werden.

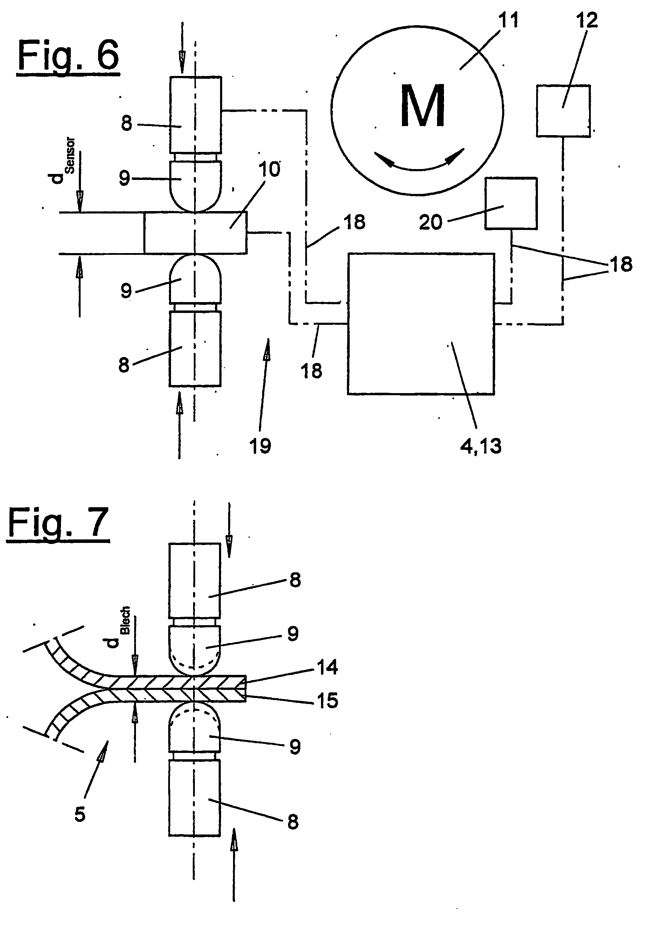

Dieser Kalibriervorgang wird während des Schweißbetriebs und bei Auftreten von Kappenverschleiß und/oder nach einem Fräsen der Elektrodenkappen (9) wiederholt. Durch Verschleiß oder Fräsen verkürzen sich die Elektrodenkappen (9), was in Figur 7 gestrichelt dargestellt ist. Dementsprechend vergrößert sich beim Kalibrieren der Schließweg der Schweißzange (2). Diese Änderung wird als Korrekturwert in die Positionssteuerung (13) entsprechend der vorstehend zu Figur 11 beschriebenen Variablentransformation eingebracht. Die Positionssteuerung (13) kompensiert dann im Schweißbetrieb automatisch die Kappenänderungen, so dass die Zuordnung von Position und Elektrodenkraft stimmt.

Das eingangs erwähnte Anpassverfahren und die Anpassvorrichtung (17) dienen dazu, eine schweißgerechte Relativposition von Schweißzange (2) und Werkstück (5) zu ermitteln und einzunehmen sowie den Positionierhub anzupassen. Hierbei wird diese Relativposition durch eine Roboterbewegung oder durch eine Schließbewegung der positionierten Schweißzange (2) gesucht und mittels eines vorzugsweise berührenden Elektrodenkontakts oder eines gemessenen Elektrodenabstands festgestellt.

In der einen Variante kann mit der vom Roboter (3) geführten offenen Schweißzange (2) durch eine Roboterbewegung die Position des hierzu relativ ortsfesten Werkstücks (5) gesucht und über die Ermittlung eines Berührungskontakts oder eines Abstands festgestellt werden. In der zweiten Variante ist die Kinematik umgekehrt, wobei mit dem vom Roboter (3) bewegten Werkstück (5) die relativ ortsfeste offene Schweißzange (2) gesucht wird. In der dritten Variante des Suchens per Schließbewegung der relativ ortsfest positionierten Schweißzange (2) gegenüber dem Werkstück (5) können wahlweise die Schweißzange (2) oder das Werkstück (5) oder beide von einem Roboter (3) geführt werden. Die Suchstrategie läuft in allen Fällen sinnvoller Weise in der Robotersteuerung (4) ab.

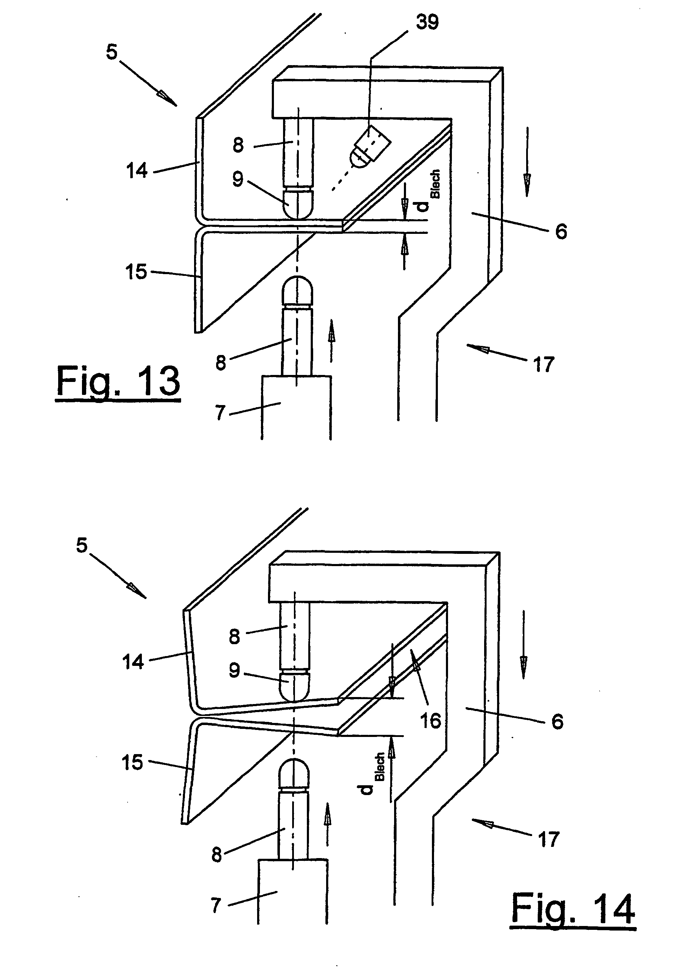

Außerdem kann mit der Anpassvorrichtung (17) auch die Schweißzange (2) nach den Abmessungen des Werkstücks (5) kalibriert werden. Wie Figur 13 und 14 verdeutlichen, können z.B. die beiden Blechlagen (14,15) an der Schweißstelle plan aufeinander liegen oder unter Bildung eines Spaltes (16) aufklaffen. Dementsprechend ergibt sich eine vermeintlich unterschiedliche Blechdicke $d_{Blech}$, die in der Positionssteuerung (13) zu berücksichtigen ist.

Zur Durchführung dieses Anpassverfahrens hat die Schweißeinrichtung (1) eine in unterschiedlicher Weise ausgestaltbare Anpassvorrichtung (17), mit der ein Kontakt oder ein Abstand zwischen der Elektrode (8) bzw. der Elektrodenkappen (9) und dem Werkstück (5) detektiert wird. Die Anpassvorrichtung (17) ist hierzu über eine Leitung (18) mit der Robotersteuerung (4) verbunden.

Durch die Anpassvorrichtung (17) kann auf die bisher erforderlichen Zangenausgleichssysteme verzichtet werden. Die Schweißzange (2) ist dann vorzugsweise mechanisch starr mit dem dem Handflansch (37) des Roboters (3) verbunden, wobei auch der feststehende Elektrodenarm (6) und die dazu gehörige Elektrode (8) relativ zum Handflansch (37) fest sind.

Wenn der Suchvorgang vom Roboter (3) über Berührungskontakt und durch eine Verfahrbewegung der Schweißzange (2) durchgeführt wird, stoppt der Roboter (3) sofort nach dem Kontakt, wobei er wegen der Trägheit über den Kontaktpunkt etwas hinaus fährt. Der Roboter fährt dann zurück auf den gespeicherten Kontaktpunkt, wobei anschließend oder gleichzeitig die Schweißzange (2) zum Schweißen geschlossen werden kann. Entsprechendes gilt bei kinematischer Umkehr, wobei der Roboter (3) das Werkstück (5) relativ zur Schweißzange (2) bewegt. Bei einer Suche über die alternative Abstandsmessung kann die gesuchte Relativposition bevorzugt berührungsfrei und ohne eine Kollisionsgefahr von Elektrode (8) und Werkstück (5) ermittelt werden. Wenn der Suchvorgang durch eine Schließbewegung der Schweißzange (2) durchgeführt wird, werden aus der anfänglichen Elektrodenposition und dem zurückgelegten Elektrodenweg unter Berücksichtigung der Blechdicke Korrekturwerte zur anschließenden Berichtigung und Nachführung der Position des Roboter (3) und der mitgeführten Schweißzange (2) oder des mitgeführten Werkstück (5) gewonnen. Auch hier kann alternativ zur Werkstückberührung mit einer berührungslosen Abstandsmessung gearbeitet werden.

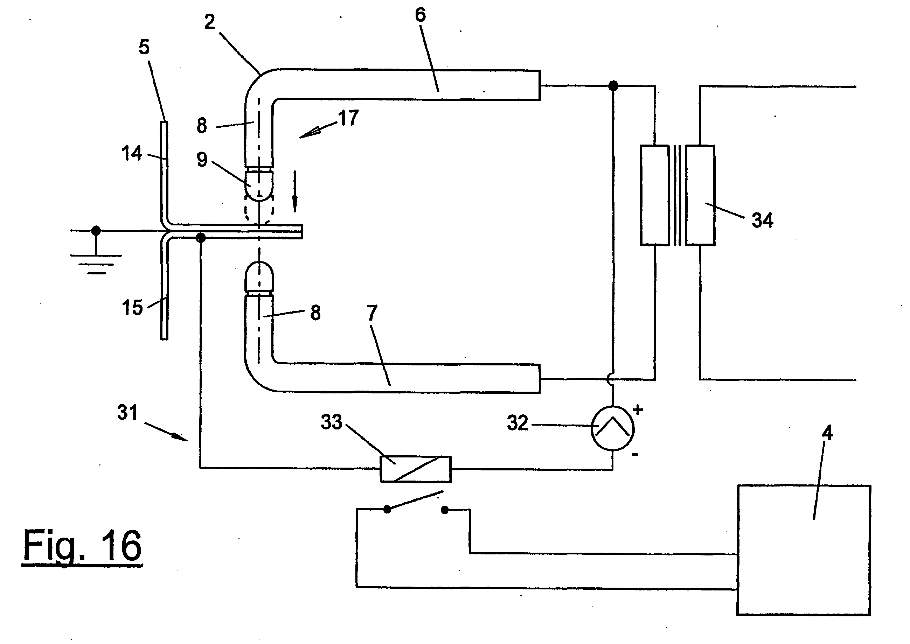

In der bevorzugten und in Figur 16 dargestellten Ausführungsform ist die Anpassvorrichtung (17) als eine mit der Robotersteuerung (4) verbundene elektrische Kontaktsensorik (31) ausgebildet. Sie kann bei beiden Sucharten mit Verfahrbewegung des Roboters (3) bzw. Schließbewegung der Schweißzange (2) eingesetzt werden. Die Anpassvorrichtung (17) besteht aus mindestens einem elektrischen Schaltkreis mit einer Spannungsquelle (32) und einem elektrischen Schalter (33), z.B. einem Relais, welcher vorzugsweise an den festen elektrisch isolierten Zangenarm (6) und an das vorzugsweise geerdete Werkstück (5) angeschlossen ist. Ein zweiter entsprechender Schaltkreis (nicht dargestellt) kann an den anderen beweglichen Zangenarm (7) angeschlossen sein. Die Schweißzange (2) ist zur Isolierung galvanisch vom Roboter (3) getrennt. Figur 16 zeigt ferner schematisch einen Teil der Schweißstromversorgung mit einem z.B. niederohmigen Transformator (34).

Beim Suchen ist die Schweißzange (2) geöffnet oder nur teilweise geschlossen, so dass keine der Elektroden (8) anfangs Kontakt mit dem Werkstück (5) hat. Der Schaltkreis ist durch den Abstand zwischen Elektroden (8) und Werkstück (5) zunächst offen. Bei dem gestrichelt dargestellten Berührungskontakt der festen Elektrode (8) wird der Schaltkreis geschlossen und die angelegte Spannung lässt einen Strom fließen, welcher das Relais (33) schaltet. Das Relais (33) schaltet einen Steuerkreis in der Robotersteuerung (4), der dort eine sofortige Speicherung der zugehörigen Position der kontaktierenden Elektrode (8) bzw. der Achsenstellung und der Position des Roboters (3) bewirkt.

In Abwandlung des vorigen Beispiels kann die Elektrode (8) am beweglichen Zangenarm (7) bei einer Schließbewegung der vorpositionierten Schweißzange (2) zum Werkstück (5) verfahren werden. Die durch den vorgenannten zweiten Schaltkreis in Verbindung mit der Steuerung (4,13) und die Positionsmesseinrichtung (12) ermittelte Position des Kontaktpunktes wird gespeichert. Aus diesem Wert wird unter Berücksichtigung der Ausgangsposition beider Elektroden (8) und der vorgegebenen Blechdicke die Anfahrposition der feststehenden Elektrode (8) berechnet, die der Roboter (3) anschließend anfährt, wobei nachher oder gleichzeitig die Schweißzange (2) zum Schweißen geschlossen werden kann.

Alternativen für das mit Berührung suchende Anpassverfahren und die Anpassvorrichtung (17) sind in verschiedener Weise möglich.

Zum einen können für die Ermittlung der tatsächlichen Werkstückposition und die Feststellung des Blechkontakts der Motorstrom und/oder die Motordrehzahl und/oder die Motorposition eines vorzugsweise elektrischen Armantriebs (11) oder der Roboterantriebe in Verbindung mit der Robotersteuerung (4) aufgenommen, gespeichert und mit einer Vergleichsschaltung ausgewertet werden. Bei Blechkontakt steigt der Motorstrom bzw. sinkt die Motordrehzahl. Eine ähnliche Auswertung von Änderungen des Antriebsverhaltens ist auch mit anderen Arten von Armantrieben (11) möglich. Aus der Motorposition des Armantriebs (11), die anhand der vorbeschriebenen Positionsmesseinrichtung (12) ermittelt wird, kann der Schließweg des oder der Zangenarme (6,7) bis zum Blechkontakt berechnet und als Korrekturwert für die Roboterposition an die Robotersteuerung (4) übermittelt werden.

Bei einer anderen Variante der Anpassvorrichtung (17) werden die beiden Kraftmesser (29,30) der Schweißzange (2) für die Kontakt- und Positionssuche herangezogen. Hierbei werden die Kraftistwerte der beiden in Brückenschaltung betriebenen Kraftmesser (29,30) in der Robotersteuerung (4) aufgenommen, gespeichert und mit einer Vergleichsschaltung ausgewertet. Die Schweißzange (2) schließt hierbei mit kleiner Elektrodenkraft. Der feste Zangenarm (6) hat dabei in der Regel noch keinen Blechkontakt, so dass sein Kraftmesser (29) einen kleineren Wert als der andere Kraftmesser (30) bei Blechkontakt des beweglichen Zangenarms (7) anzeigt. Der Roboter verfährt dann die Schweißzange (2) derart, dass der feste Zangenarm (6) in Blechkontakt gebracht wird und beide Kraftmesser (29,30) gleiche oder in einem anderen gewünschten Relativverhältnis stehende Elektrodenkräfte signalisieren. In dieser Position stoppt der Roboter (3) und die Schweißzange baut die endgültige Elektrodenkraft zum Schweißen auf.

In einer weiteren Variante kommt ein mehrachsig messender Kraftsensor, insbesondere eine elektrische Wägezelle (36) als stabiler Zwischenflansch zwischen Schweißzange (2) und Handflansch (37) des Roboters (3) zum Einsatz. Figur 2 verdeutlicht schematisch diese Anordnung. Die Wägezelle (36) misst die Rückwirkung der Kräfte von der Schweißzange (2) auf den Roboter (3). Der Messwert des Sensors (36) wird zunächst am programmierten Startpunkt gespeichert. Er repräsentiert das bloße Zangengewicht. Die Schweißzange (2) schließt dann mit kleiner Elektrodenkraft. Bei einer Fehlposition der Schweißzange (2) verändert sich der Messwert durch den voreilenden Blechkontakt des beweglichen Zangenarms (7) und die sich hierdurch aufbauende Reaktionskraft. Der Roboter (3) verfährt dann die Schweißzange (2) derart, dass der Messwert des Sensors (36) eine beliebig gewünschte Größe einnimmt. Vorzugsweise soll er wieder mit dem Ursprungswert am Startpunkt übereinstimmen, so dass die Schweißzange (2) reaktionskräftefrei zum Werkstück (5) positioniert ist. In dieser Position stoppt der Roboter (3) und die Schweißzange (2) baut die endgültige Elektrodenkraft zum Schweißen auf.

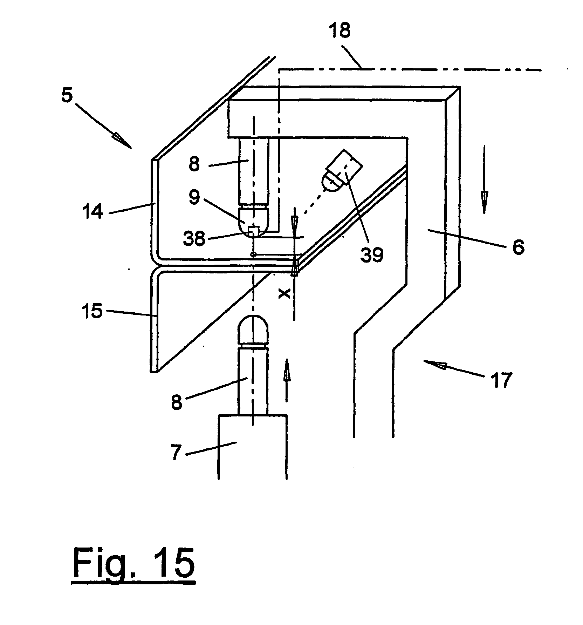

Bei der weiteren Variante einer Suche mit Abstandsmessung gemäß Figur 15 wird die geöffnete Schweißzange (2) mit der suchenden Elektrode (8) bzw. Elektrodenkappe (9), vorzugsweise mit dem TCP, welche wiederum vorzugsweise am festen Zangenarm (6) angeordnet ist, vom Roboter (3) in eine vorprogrammierte kollisionsfreie Suchposition zum Werkstück (5) gefahren. Aus dieser Position wird der Abstand x eines relevanten Elektrodenpunktes, vorzugsweise der Spitze (TCP) der Elektrodenkappe (9), zum Werkstück (5) durch eine beliebig geeignete Abstandssensorik (38) vorzugsweise berührungslos gemessen. Die Abstandssensorik (38) kann z.B. ein kapazitiver oder induktiver Abstandssensor sein. Der Abstand kann ferner durch einen beispielsweise externen optischen Sensor (39) gemessen werden. Die abstandsmessende Sensorik (38,39) ist über eine Leitung (18) mit der Robotersteuerung (4) verbunden, welche aus dem gemessenen Abstand und der bekannten vorprogrammierten Suchposition die Istwerte für die schweißgerechte Relativposition von Werkstück (5) und Schweißzange (2) und vor allem die Istposition des schweißgerechten Kontaktpunktes errechnet, an dem die Elektrode (8) bzw. Elektrodenkappe (9) am Werkstück (5) zum Schweißen anliegen soll. Diese Istposition wird anschließend vom Roboter (3) zielgenau und ohne Trägheitsund Kollisionsprobleme angefahren. Gleichzeitig oder danach schließt die Schweißzange (2) und beginnt die Schweißung.

Die vorbeschriebene Abstandssuche kann alternativ mit kinematischer Umkehr durchgeführt werden, wobei der Roboter (3) das Werkstück (5) relativ zur ortsfesten oder von einem zweiten Roboter gehaltenen Schweißzange (2) bewegt. Beide Varianten der Abstandssuche mit geeigneter Sensorik (38,39) können auch bei der Suche mittels Schließbewegung der Schweißzange (2) eingesetzt werden, wobei die Schweißzange (2) auf eine kollisionsfreie Suchposition schließt.

In einer zusätzlichen Abwandlung kann die vorerwähnte optische Sensorik (39) für die im ersten Ausführungsbeispiel beschriebene Kontaktsuche und zum Feststellen eines Berührungskontaktes von Elektrode (8) bzw. Elektrodenkappe (9) und Werkstück (5) eingesetzt werden. Figur 13 zeigt dies andeutungsweise.

Die Anpassvorrichtung (17) kann gemäß Figur 13 und 14 auch zur Messung der tatsächlichen Dicke $d_{Blech}$ der Blechlagen (14,15) benutzt werden. Nach Speicherung der Roboterposition bei Blechkontakt oder Abstandsmessung der ersten festen Elektrode (8) wird die zweite bewegliche Elektrode (8) unter Schließung der Schweißzange (2) vom Armantrieb (11) in Pfeilrichtung nach oben bewegt. Diese Schließbewegung erfolgt im Momentenmodus bis zur Bauteilberührung. Hierbei kann ein zweiter nicht dargestellter Schaltkreis an den beweglichen Zangenarm (7) angeschlossen sein. Der Kontakt wird in der vorerwähnten Weise über ein Relais festgestellt. Alternativ kann der Kontakt über einen Anstieg des Motorstroms im Armantrieb (11) festgestellt und von der Messeinrichtung (20) ermittelt werden. Hierbei wird gleichzeitig der zugehörige Positionswert des Armantriebs (11) von der Positionsmesseinrichtung (12) ermittelt und gespeichert. Dieser Schließweg wird mit dem zuvor ermittelten Schließweg der Elektroden (8) ohne Bleche verglichen. Die Wegdifferenz repräsentiert die tatsächliche Dicke $d_{Blech}$ der Blechlagen (14,15).

Bei guter Passgenauigkeit der Bleche (14,15) wie in Figur 13 stimmt die gemessene Blechdicke $d_{Blech}$ mit dem vorgegebenen Wert überein. Der eingangs beschriebene erste Kalibrierschritt zur Kompensation der Zangenelastizität bei einer positionsgesteuerten bzw. -geregelten Schweißzange (2), der auf einer Bauteilvorgabe beruhte, kann dann bestehen bleiben. Andernfalls ist bei Abweichungen der tatsächlichen Blechdicke vom Vorgabewert eine entsprechende Korrektur der Positionssteuerung (13) erforderlich.

Bei schlechter Passgenauigkeit der Bleche (14,15) und einem weichen Blechwerkstoff bzw. bei einer weichen Bauteilgeometrie ist eine Abweichung vom theoretischen Wert der Blechdicke gering. Bei steifen Bauteilen und harten Blechwerkstoffen kann die Abweichung aber relativ groß werden. Figur 14 verdeutlicht einen solchen Sachverhalt. Auch in diesem Fall wird der gemessene Blechdickenwert $d_{Blech}$ im Schweißpunkt gemessen und für die eventuelle Korrektur der Positionssteuerung (13) herangezogen. Insbesondere kann hierbei der von der Schweißzange (2) zurückzulegende Weg so weit vergrößert bzw. die anzusteuernde Endposition des Armantriebs (11) so weit verschoben werden, dass der Spalt (16) geschlossen wird und die aufgebogenen Bleche (14,15) in Kontakt gebracht werden. Durch die Positionssteuerung des Armantriebs (11) spielt die Rückstellkraft bzw. Steifigkeit der Aufbiegung und der Bleche (14,15) keine Rolle und braucht auch nicht ermittelt zu werden. Der Armantrieb (11) muß nur stark genug sein, um diesen Widerstand zu überbrücken. Bei einer kraftgeregelten Schweißzange (2) kann das anders sein und Korrekturen erfordern.

Die bei diesem Kalibrierschritt ermittelte Blechdicke $d_{Blech}$ kann auch in der Robotersteuerung (4) und in der Positionierung der Schweißzange (2) durch den Roboter (3) berücksichtigt werden. Hierbei kann z.B. der Roboter (3) die Schweißzange aus der vorbeschriebenen detektierten Position (fester Zangenarm (6)) um die halbe Blechdicke $d_{Blech}$ nachsetzen. Die Positionsermittlung des oberen Bleches (14) erfolgte nämlich auch weitgehend kraftlos, wobei die im tatsächlichen Schweißbetrieb auftretenden Elastizitäten des festen Zangenarms (6) nicht berücksichtigt wurden und nun über das Nachsetzen eingehen. Wird die Schweißzange (2) in der vorbeschriebenen Weise nicht nachgesetzt, kann dies zu Verformungen der Blechlagen (14,15) führen. Dieser Effekt lässt sich allerdings auch positiv ausnutzen, indem solche Verformungen der Blechlagen (14,15) bewusst erzeugt werden.

In weiterer Abwandlung bzw. Verwendung des Anpassverfahrens und der Anpassvorrichtung (17) kann die Schweißzange (2) als Messmaschine betrachtet und benutzt werden, wobei die Messdaten vorzugsweise in der Robotersteuerung (4) über ein geeignetes Analyse- und Datenspeichertool verarbeitet werden. Hierbei werden Kraft und Zangenschließweg erfaßt und der Kraftanstieg über den Weg dokumentiert. Sollte eine schlechte Passung vorliegen, so tritt im Vergleich zum normierten Kraftanstieg, der über eine Kalibrierung zu erfolgen hat, eine Veränderung in der Kurve auf. Der zwischen Kraftanstieg bei Werkstückkontakt (=Schlechte Passung) bis zur Erreichung der Nominalblechdicke zurückgelegte Weg wird abgespeichert und zusammen mit Punktnummer und Koordinaten hinterlegt.

Durch die vorstehend geschilderte Anpasstechnik der Schweißzange (2) sind die tatsächlichen Abmessungen der Blechdicke bzw. des Spaltes (16) bekannt. Auch die Nominaldicke der Bleche (14,15) ist bekannt. Bei einer Ermittlung und Speicherung der Blechdicken- und Spaltmaße an allen Schweißpunkten eines Werkstückes (5) kann durch eine entsprechende Auswertung eine Aussage über die Qualität der zu schweißenden Werkstücke (5) getroffen werden. Hier kann frühzeitig bei beginnenden Abweichungen auf die Vorproduktion der Werkstücke (5) Einfluss genommen werden oder die eigentliche Produktion gestoppt werden. Alternativ kann eine vorzugsweise automatische Schweißfolgeoptimierung und/oder eine Schweißparameteranpassung erfolgen, um die Passungseinflüsse auf die Schweissqualität zu reduzieren. Mit der Aufzeichnung der Schweißmaße ist auch eine statistische Prozesskontrolle möglich, die z.B. für eine Qualitätskontrolle und Qualitätsnachweise, z.B. hinsichtlich Schweißqualität und Bauteilgeometrie, benutzt werden kann. Eine Onlinedokumentation der Messwerte kann ferner zur Passungsdokumentation als Basis für eine Bauteiloptimierung verwendet werden. Wenn im Typenmix unterschiedliche Werkstücke (5) geschweißt werden, kann ferner festgestellt werden, ob das korrekte Werkstück oder überhaupt ein Bauteil zur Schweißung vorhanden ist (z.B. bei unterschiedlichen Materialstärken).Wenn durch Kraftund Wegmessung beim Schließen der Schweißzange (2) festgestellt wird, dass die Kraft erhöht werden muss, um die Bleche (14,15) in Schweißposition zu bringen, kann auch die maximal zulässige Zangenkraft überwacht werden. Falls diese überschritten werden müsste, kann durch Änderung anderer Schweißparameter (Strom, Zeit, usw.) eine gute Schweißung erzielt werden, ohne die Schweißzange (2) zu überlasten.

Abwandlungen der dargestellten und beschriebenen Ausführungsbeispiele und der Verfahrensschritte sind in verschiedener Weise möglich. Einzelne Kalibrier- und Anpassvorgänge können ersetzt werden durch die Eingabe von empirisch gewonnenen Korrekturwerten in die Positionssteuerung. Mit diesen Korrekturwerten kann z.B. der Elektrodenkappenverschleiß, eine Elastizitätsänderung durch Temperaturverschiebungen oder auch andere äußere Einflüsse kompensiert werden. Dies ist vor allem dann möglich, wenn diese Einflüsse sich während des Schweißbetriebs im wesentlichen gleichmäßig ändern und sich mit hinreichender Zuverlässigkeit als Erfahrungswerte erfassen lassen. Diese Korrekturwerte können periodisch in einer Stepperfunktion in die Positionssteuerung (13) eingegeben werden. Dies kann in Betriebspausen, alternativ aber auch während des Schweißbetriebs erfolgen. Auf das Anpassverfahren und die Anpassvorrichtung (17) kann ferner verzichtet und statt dessen ein konventionelles Zangenausgleichssystem eingesetzt werden.

Variabel sind ferner die konstruktiven Ausgestaltungen der Widerstandsschweißeinrichtung (1) und ihrer Bauteile sowie des Roboters (3). Statt einer Schweißzange mit zwei oder mehr Zangenarmen (6,7) kann auch ein Schweißpicker mit nur einem Pickerarm eingesetzt werden, der seine Elektrode gegen einen festen Untergrund oder ein Widerlager drückt. Variabel kann auch die Zangen- oder Klemmengeometrie und -Kinematik sein. Zudem können mehr als zwei Elektrodenarme (6,7) vorhanden sein. Die Elektrode(n) kann/können eine beliebige Form und Ausgestaltung haben. Auf wechselbare Elektrodenkappen (9) kann ggf. verzichtet werden.

BEZUGSZEICHENLISTE

1 Widerstandsschweißeinrichtung
2 Schweißzange
3 Roboter, Schweißroboter
4 Robotersteuerung
5 Werkstück, Karosserie
6 Elektrodenarm, Zangenarm, fest oder bewegt
7 Elektrodenarm, Zangenarm, bewegt
8 Elektrode
9 Elektrodenkappe
10 Sensor, Kraftsensor
11 Armantrieb, Elektromotor
12 Positionsmesseinrichtung, Wegmesser
13 Steuerung
14 Blechlage, Flansch
15 Blechlage, Flansch
16 Spalt
17 Anpassvorrichtung
18 Leitung
19 Kalibriervorrichtung
20 Messeinrichtung Motorstrom
21 Serviceeinrichtung
22 Kappenwechselvorrichtung
23 Kappenfräsvorrichtung

24    Kappenkontrollvorrichtung

25    Kalibriervorrichtung TCP

26    Messkontakt

27    federnde Lagerung

28    Bearbeitungsstation, Schweißstation

29    Kraftmesser

30    Kraftmesser

31    elektrische Kontaktsensorik

32    Stromquelle

33    Schalter, Relais

34    Transformator

35    Ständer

36    Wägezelle, Kraftsensor

37    Handflansch, Roboterflansch

38    Abstandssensorik

39    optischer Sensor

**Patentansprüche**

1. Verfahren zum Steuern, insbesondere Kalibrieren, einer elektrischen, kraft- oder positionsgesteuerten Widerstandsschweißeinrichtung (1), bestehend aus einer stationären oder bewegten, vorzugsweise von einem Roboter (3) geführten, Schweißzange (2) mit ein oder mehreren zumindest teilweise beweglichen Elektrodenarmen (6,7) mit Elektroden (8), einem Armantrieb (11) und einer Steuerung (13), **dadurch gekennzeichnet, dass** die Schweißzange (2) mittels eines zwischen die Elektroden (8) einbringbaren und die Elektrodenkraft zwischen den Elektroden (8) unmittelbar oder mittelbar messenden Sensors (10) nach der Elektrodenkraft kalibriert wird, wobei zum Kalibrieren die Elektroden (8) gegen einen zwischen ihnen befindlichen Kraftsensor (10) gepresst werden, wobei der Kraftsensor (10) kontinuierlich oder bei mehreren einzelnen bestimmten Kraftschwellen Mess- oder Schaltsignale an die Steuerung (13) zur Ermittlung einer Kennlinie abgibt.

2. Verfahren nach Anspruch 1, **dadurch gekennzeichnet, dass** bei einer kraftgeregelten Schweißzange (2) ein oder mehrere Kraftmesser (29,30) an der Schweißzange (2) und/oder die Auswertung ihrer Messignale nach der tatsächlichen gemessenen Elektrodenkraft kalibriert werden.

3. Verfahren nach Anspruch 1, **dadurch gekennzeichnet, dass** bei einer positionsgesteuerten oder -geregelten Schweißzange (2) die Steuerung (13) des Armantriebs (11) und die Positions/Kraft-Zuordnung kalibriert wird.

4. Verfahren nach Anspruch 3, **dadurch gekennzeichnet, dass** beim Kalibrieren die Steuerung (13) die zu den Schaltsignalen des Kraftsensors (10) zugehörigen Positionswerte von einer Positionsmesseinrichtung (12) ermittelt, speichert und hieraus unter Abgleich mit vorgegebenen oder ermittelten Werkstückabmessungen die im Schweißbetrieb erforderlichen Positionswerte für den Armantrieb (11) berechnet.

5. Verfahren nach einem der vorhergehenden Ansprüche, **dadurch gekennzeichnet, dass** die Schweißzange (2) nach dem Verschleiß der Elektroden (8) und/oder nach der Position und den Abmessungen eines Werkstücks (5) kalibriert wird.

6. Verfahren nach einem der vorhergehenden Ansprüche, **dadurch gekennzeichnet, dass** zum Kalibrieren unter Kompensation des Elektrodenverschleißes die Elektroden (8) vor dem ersten Gebrauch und anschließend bei Pausen im Schweißbetrieb wiederholt in direkten Kontakt miteinander gebracht werden, wobei die hierbei eingenommenen Positionen des Armantriebs (11) detektiert und zur Ermittlung des Elektrodenabbrands miteinander verglichen werden und wobei die Differenzwerte für die Korrektur der Positionssteuerung des Armantriebs (11) im Schweißbetrieb herangezogen werden.

7. Elektrische kraft- oder positionsgesteuerte Widerstandsschweißeinrichtung (1), bestehend aus einer stationären oder bewegten, vorzugsweise von einem Roboter (3) geführten, Schweißzange (2) mit ein oder mehreren zumindest teilweise beweglichen Elektrodenarmen (6,7) mit Elektroden (8), einem Armantrieb (11) und einer Steuerung (13), **dadurch gekennzeichnet, dass** die Widerstandsschweißeinrichtung (1) eine stationäre oder bewegliche Kalibriervorrichtung (19) mit einem in die geöffnete Schweißzange (2) einbringbaren Sensor (10) aufweist, der mit der Zangen- und/oder Robotersteuerung (4,13) verbindbar ist und mit dem die Elektrodenkraft zwischen den Elektroden (8) unmittelbar oder mittelbar messbar ist, wobei der Kraftsensor (10) kontinuierlich oder bei mehreren einzelnen bestimmten Kraftschwellen Mess- oder Schaltsignale an die Steuerung (13) zur Ermittlung einer Kennlinie abgibt.

8. Einrichtung nach Anspruch 7, **dadurch gekennzeichnet, dass** die Schweißzange (2) kraftgesteuert oder kraftgeregelt ist und mindestens einen Kraftmesser (29,30) an mindestens einem Zangenarm (6,7) aufweist, wobei der Kraftmesser (29,30) mit der Zangen- und/oder Robotersteuerung (4,13) verbindbar und mittels der Kalibriervorrichtung (19) kalibrierbar ist.

9. Einrichtung nach Anspruch 7, **dadurch gekennzeichnet, dass** die Schweißzange (2) eine Positionsmesseinrichtung (12) aufweist und positionsgesteuert ist.

10. Einrichtung nach einem der Ansprüche 7 bis 9, **dadurch gekennzeichnet, dass** die Widerstandsschweißeinrichtung (1) eine mit der Robotersteuerung (4) verbundene Anpassvorrichtung (17) mit einer Einrichtung zum Detektieren eines Elektrodenkontakts oder Abstands am Werkstück (5) zur Ermittlung einer schweißgerechten und vom Roboter (3) anzusteuernden Relativposition zwischen der Schweißzange (2) und dem Werkstück (5) aufweist.

**Claims**

1. Method for control, in particular calibration, of an electrical force-controlled or position-controlled resistance welding device (1), comprising stationary or moving welding tongs (2), which are preferably guided by a robot (3), having one or more at least partially moving electrode arms (6, 7) with electrodes (8), an arm drive (11) and a controller (13), **characterized in that** the welding tongs (2) are calibrated on the basis of the electrode force by means of a sensor (10) which can be introduced between the electrodes (8) and directly or indirectly measures the electrode force between the electrodes (8), with the electrodes (8) being pressed against a force sensor (10), which is located between them, for calibration, and with the force sensor (10) emitting measurement or switching signals to the controller (13) continuously or at two or more individual specific force thresholds in order to determine a characteristic.

2. Method according to Claim 1, **characterized in that**, in the case of force-controlled welding tongs (2), one or more force measurement devices (29, 30) on the welding tongs (2) and/or the evaluation of their measurement signals are/is calibrated on the basis of the actual measured electrode force.

3. Method according to Claim 1, **characterized in that**, in the case of position-controlled or - regulated welding tongs (2), the controller (13) for the arm drive (11) and the position/force association are calibrated.

4. Method according to Claim 3, **characterized in that**, during the calibration process, the controller (13) determines those position values of a position measurement device (12) which are associated with the switching signals of the force sensor (10), stores them, and uses them to calculate the position values which are required during welding operation for the arm drive (11), subject to adjustment for the predetermined or determined workpiece dimensions.

5. Method according to one of the preceding claims,
**characterized in that** the welding tongs (2) are calibrated on the basis of the wear to the electrodes (8), and/or on the basis of the position and the dimensions of a workpiece (5).

6. Method according to one of the preceding claims,
**characterized in that**, for calibration and with compensation for the electrode wear, the electrodes (8) are repeatedly brought into direct contact with one another before initial use and subsequently during pauses during welding operation, with the positions of the arm drive (11) which are assumed in this case being detected and being compared with one another in order to determine the electrode erosion, and with the difference values being used for correction of the position control for the arm drive (11) during welding operation.

7. Electrical force-controlled or position-controlled resistance welding device (1), comprising stationary or moving welding tongs (2), which are preferably guided by a robot (3), having one or more at least partially moving electrode arms (6, 7) with electrodes (8), an arm drive (11) and a controller (13), **characterized in that** the resistance welding device (1) has a stationary or moving calibration apparatus (19) with a sensor (10) which can be introduced into the opened welding tongs (2), can be connected to the tongs and/or robot controller (4, 13), and by means of which it is possible to directly or indirectly measure the electrode force between the electrodes (8), with the force sensor (10) emitting measurement or switching signals to the controller (13) continuously or at two or more individual specific force thresholds in order to determine a characteristic.

8. Device according to Claim 7, **characterized in that** the welding tongs (2) are force-controlled or force-regulated and have at least one force measurement device (29, 30) on at least one arm of the tongs (6, 7), in which case the force measurement device (29, 30) can be connected to the tongs and/or robot controller (4, 13), and can be calibrated by means of the calibration apparatus (19).

9. Device according to Claim 7, **characterized in that** the welding tongs (2) have a position measurement device (12), and are position-controlled.

10. Device according to one of Claims 7 to 9, **characterized in that** the resistance welding device (1) has a matching apparatus (17), which is connected to the robot controller (4), with a device for detection of an electrode contact or distance to the workpiece (5) in order to determine a relative position, which is correct for welding and which is to be driven to by the robot (3), between the welding tongs (2) and the workpiece (5).

**Revendications**

1. Procédé en vue de la commande, notamment du calibrage d'un dispositif de soudage par résistance électrique (1) commandé par force ou par la position, se composant d'un porte-baguettes (2) stationnaire ou mobile, de préférence guidé par un robot (3) possédant un ou plusieurs bras d'électrodes (6, 7) au moins partiellement mobiles avec des électrodes (8), un entraînement de bras (11) et une commande (13), **caractérisé en ce que** le porte-baguettes (2) est calibré en fonction de la force des électrodes au moyen d'un capteur (10) pouvant être inséré entre les électrodes (8) mesurant la force des électrodes entre les électrodes (8) de manière directe ou indirecte, les électrodes (8) étant pressées contre un capteur de force (10) se trouvant entre elles en vue du calibrage, le capteur de force (10) délivrant en continu ou lors de plusieurs seuils de force individuels déterminés des signaux de mesure ou de commutation à la commande (13) en vue de la détermination d'une ligne caractéristique.

2. Procédé selon la revendication 1, **caractérisé en ce que** dans le cas d'un porte-baguettes (2) réglé par force, un ou plusieurs dynamomètres (29, 30) sont calibrés sur le porte-baguettes (2) et/ou l'évaluation de leurs signaux de mesure est calibrée en fonction de la force des électrodes effectivement mesurée.

3. Procédé selon la revendication 1, **caractérisé en ce que** dans le cas d'un porte-baguettes (2) réglé ou commandé par la position, la commande (13) de l'entraînement des bras (11) et l'attribution de la position/force sont calibrées.

4. Procédé selon la revendication 3, **caractérisé en ce qu'**en cas de calibrage, la commande (13) détermine, mémorise les valeurs de position associées aux signaux de commutation du capteur de force (10) par un dispositif de mesure de position (12) et calcule à partir de celles-ci les valeurs de position nécessaires en fonctionnement de soudure pour l'entraînement des bras (11) en ajustant avec des dimensions de pièces prédéfinies ou déterminées.

5. Procédé selon l'une quelconque des revendications précédentes, **caractérisé en ce que** le porte-baguettes (2) est calibré en fonction de l'usure des électrodes (8) et/ou en fonction de la position et des dimensions d'une pièce (5).

6. Procédé selon l'une quelconque des revendications précédentes, **caractérisé en ce qu'**en vue du calibrage avec compensation de l'usure des électrodes, les électrodes (8) sont amenées en contact direct les unes avec les autres avant la première utilisation et ensuite lors de pauses pendant le fonctionnement de soudure de manière répétée, les positions adoptées en l'occurrence de l'entraînement des bras (11) étant détectées et comparées les unes aux autres en vue de la détermination de l'usure des électrodes et les valeurs différentielles étant utilisées pour la correction de la commande de position de l'entraînement des bras (11) en fonctionnement de soudure.

7. Dispositif de soudage par résistance électrique (1) commandé par force ou par la position, se composant d'un porte-baguettes (2) stationnaire ou mobile, de préférence guidé par un robot (3) possédant un ou plusieurs bras d'électrodes (6, 7) au moins partiellement mobiles avec des électrodes (8), un entraînement de bras (11) et une commande (13), **caractérisé en ce que** le dispositif de soudage par résistance (1) présente un dispositif de calibrage (19) stationnaire ou mobile possédant un capteur (10) pouvant être inséré dans le porte-baguettes ouvert (2), capteur qui peut être relié avec la commande de la pince pour électrodes et/ou du robot (4, 13) et avec lequel la force des électrodes peut être mesurée de manière directe ou indirecte entre les électrodes (8), le capteur de force (10) délivrant en continu ou lors de plusieurs seuils de force individuels déterminés des signaux de mesure ou de commutation à la commande (13) en vue de la détermination d'une ligne caractéristique.

8. Dispositif selon la revendication 7, **caractérisé en ce que** le porte-baguette (2) est commandé par force ou réglé par force et présente au moins un dynamomètre (29, 30) sur au moins un bras de pince pour électrodes (6, 7), le dynamomètre (29, 30) pouvant être relié à la commande de la pince pour électrodes et/ou du robot (4, 13) et pouvant être calibré au moyen du dispositif de calibrage (19).

9. Dispositif selon la revendication 7, **caractérisé en ce que** le porte-baguettes (2) présente un dispositif de mesure de position (12) et est commandé par la position.

10. Dispositif selon l'une quelconque des revendications 7 à 9, **caractérisé en ce que** le dispositif de soudage par résistance (1) présente un dispositif d'adaptation (17) relié à la commande du robot (4) possédant un dispositif en vue de la détection d'un contact des électrodes ou d'un espacement avec la pièce (5) en vue de la détermination d'une position relative correcte pour la soudure et devant être commandée par le robot (3) entre le porte-baguettes (2) et la pièce (5).

Fig. 1

Fig. 2

Fig. 3

Fig. 4

EP 1 409 190 B1

# Fig. 5

EP 1 409 190 B1

## Fig. 6

8

$d_{Sensor}$

9

10

11

M

12

18

20

18

18

4,13

19

## Fig. 7

8

9

$d_{Blech}$

14

15

9

5

8

## Fig. 8 Schaltzustände der Sensor-Ausgänge

$OUT_2$

Kraft [ F ]

$OUT_1$

Kraft [ F ]

$F_1$       $F_2$

Kraft [ F ]

$F_2$

$F_1$

$P_1$       $P_2$

Position [ P ]

## Fig. 9

Zangenkennlinie beim Schließen auf den Kraftsensor

Kraft [ F ]

F

## Fig. 10

Funktion $P_{Sensor} = f(F)$

$P_{Sensor}$

Position [ P ]

## Fig. 11

Kraft [ F ]

F

Variablentransformation

$P_{Sensor}$ auf $P_{Blech}$

$P_{Sensor}$   $P_{Blech}$   Position [ P ]

## Fig. 12

Kraft [ F ]

F

Funktion $P_{Blech} = f(F)$

$P_{Sensor}$   $P_{Blech}$   Position [ P ]

Fig. 13

Fig. 14

## Fig. 15

Fig. 16